# EUROPEAN PATENT APPLICATION

(11) **EP 3 477 496 A1**
(43) Date of publication of application: **01.05.2019**
(21) Application number: 17198104.6
(22) Date of filing: 24.10.2017
(51) Int. Cl.: G06F 17/28

(54) **A REVISION SYSTEM AND METHOD FOR REVISING TRANSLATED TEXTS WITH SEGMENT MATCHING**

(71) Applicant: Televic Education NV, 8870 Izegem (BE)
(72) Inventor: Vanlerberghe, Filip Robert Maria, 8860 Lendelede (BE); Lagatie, Ruben, 8980 Geluveld (BE); Staelens, Nicolas, 8530 Harelbeke (BE)
(74) Representative: IP HILLS NV

(57) **Abstract**

A revision system (100) for revising translated texts (111-11n) that represent respective translations of a same source text by different translators, comprises:
- a translation error memory (120) to store translation errors;
- a revision module (130) with a search submodule (131) configured to search for the translation errors in a translated text and to identify the translation errors for acceptance or rejection by a revisor, to thereby generate a revised translated text; and
- a revised texts memory (140) to store revised translated texts.

The revision module (130) further comprises:
- a segmentation submodule (132) to identify segments in the translated text;
- a segment matching submodule (133) to determine for a segment in the translated text a match with a corresponding segment in a revised translated text stored in the revised texts memory (140); and
- a segment marking submodule (134) to mark the segment (161, 162) in the translated text in view of the match.

## Description

### Field of the Invention

This invention relates to a revision system and method for revising a set of translated texts. More particularly, the invention relates to a revision system and method to revise a plurality of translated texts that represent translations of a same source text by different translators, e.g. student translators. The invention aims at reducing the time and effort spent by a revisor to revise such a set of translated texts.

### Background of the Invention

A revision system for revising a plurality of translations of a same source text produced by different translators is useful for instance in an educational or training context, where the translated texts of a substantial number of student translators must be revised and scored objectively. The skilled person however shall appreciate that such revision system is also useful in alternative applications, such as for example evaluating the performance of a plurality of translators, etc.

A revision system for translations is already known from the bachelor's diploma thesis "A Hybrid Approach to Parallel Text Alignment" from the author Adam Obrusnik, published by the Masaryk University Faculty of Arts in 2012, and retrievable via:
https://is.muni.cz/th/356468/ff_b/Obrusnik_Automatic_alignment_ BA_Thesis.pdf
This revision system described by Obrusnik is marketed as the Hypal system and made available as an online tool via www.hypal.eu. Hypal displays the source text and a translated text of this source text in an aligned manner to a revisor. As further described in the bachelor's diploma thesis "Defining an Error Typology: the Case of CELTraC" from the author Simon Javora, published by the Masaryk University Faculty of Arts in 2015, more precisely "section 4 HYPAL" thereof, the revisor can identify translation errors by marking or highlighting a wrong word or expression in an error tagging interface for the translated text. The marked translation error can be assigned an error category. The translation error is thereupon highlighted with a particular color associated with the error category. Optionally, a correction can be entered by the revisor. Hypal enables a revisor or teacher, by means of an error statistics section, to view and analyze the frequency of appearance of various error categories in one specific translation or for one specific translator.

In general, two types of revision methods can be distinguished. The first type of revision involves manual revision of the translated texts, one after the other, by a revisor. Manual revision however remains labour intensive, and does not always result in objective revisions. It remains difficult to guarantee consistency, which is required when translations are scored in the context of an exam, an educational test or a hiring assessment. In such a context, it is important that for every translation in the set, all identical errors are found and the same penalty or negative score is applied for identical translation errors. In addition to poor consistency with respect to scoring, manual revision often also does not enable to provide consistent and constructive feedback like possible corrections for identical translation errors across translated texts of the set.

The second type of revision systems relies on a revision memory or translation error memory wherein errors or wrong translations are stored. Such revision system shall suggest errors present in a translated text to the revisor of the translated text, and the revisor shall accept or reject a translation error suggested by the system. The system obviously only suggests translation errors it already knows, i.e. translation errors that are stored in the revision memory. In case new translation errors are identified by the revisor, the system stores such new error in the revision memory and checks if such new error also appears in previously revised translated texts that are stored in a revised texts memory, or in translated texts of the same set that are not yet revised. Revised text memory in this context must be interpreted broadly to cover any memory, database, cloud store, etc., wherein the translated texts and the translation errors already identified therein are memorized. This way, revision of a set of translations of a same source text is objectified.

Even with a revision system based on a revision memory, revision of a set of translated texts of the same source text, generated by different translators, remains a tedious, repetitive and labour-intensive task for the revisor. Even if there is a complete or partial match between a translated text and a previously revised translated text, or between portions thereof, the revisor has to revise the translation again. If plural translators translate a certain portion of the source text identically or nearly identically, these identical or nearly identical translations have to be revised separately and the revisor should accept or reject the suggested identical translation errors one by one for each one of the identical translations.

It is therefore an objective of the present invention to provide a revision system and method for revision of a set of translated texts with improved efficiency and consistency, especially when revising a plurality of translations of the same source text by different translators.

### Summary of the Invention

According to the present invention, the above defined objective is realized by the revision system for revising translated texts as defined by claim 1, the revision system being configured to receive:
- a set of translated texts, the translated texts comprising respective translations of a same source text by different translators,
the revision system comprising:
- a translation error memory configured to store translation errors associated with the translated texts;
- a revision module comprising a search submodule configured to search for the translation errors in a translated text out of the set and to identify the translation errors in the translated text for acceptance or rejection by a revisor, to thereby generate a revised translated text; and
- a revised texts memory configured to store revised translated texts,
wherein the revision module further comprises:
- a segmentation submodule configured to identify segments in the translated text;
- a segment matching submodule configured to determine for a segment in the translated text a corresponding segment in a revised translated text stored in the revised texts memory best matching with the segment; and
- a segment marking submodule configured to mark the segment in the translated text in view of the match.

Thus, the revision system according to the invention identifies segments in a translated text, compares a segment with corresponding segments in already revised translations of the same source text and determines the best matching corresponding segment amongst them. The already revised translations are assumed to be available from a revised texts memory. Revised texts memory in this context must be interpreted broadly to cover any memory, database, cloud store, etc., wherein the translated texts and the translation errors already identified therein are memorized. This may for instance be the database wherein also the source text and the (non-revised) translated texts are stored. If there is a strong match between a segment in the translation of a first translator and the translation of the same segment in the source text by a different translator, there is no need for the revisor to revise the entire segment. Such matching segments between a translation under revision and a previously revised translation are marked in the translation under revision such that the revisor only has to check the differences. Segments are portions of a text that can be identified automatically by text processing tools or semi-automatically based on input of the revisor. A segment may for instance be a paragraph, numbered or not, or a sentence. Corresponding segments in the context of the present invention are segments in different translated texts that represent the translation of the segment or the same portion of text in the source text. In order to determine the match between corresponding segments across different translations, different criteria may be applied, like for instance the percentage of identical words, the maximum amount of subsequent identical words, etc. Marking the matching segment may be realized by background colouring the segment, e.g. with a first colour when the segment matches with an error-free segment in a previously revised translated text, with a second colour when the segment matches with an error-containing segment in a previously revised translated text, or with a combination of colours to distinguish translation errors from error-free portions in the matching segments, or to distinguish identical portions from differing portions in the matching segments. The skilled person however will appreciate that marking may be achieved differently, e.g. through text colouring, through underlining, through changing font types, font sizes, etc.

Embodiments of the revision system according to the present invention, as defined by claim 2, further comprise:
- a display configured to display the translated text or a portion of the translated text comprising the segment marked, and configured to display the corresponding segment best matching with the segment.

This way, the revisor is presented a view of the translated text with matching segment(s) marked and in addition is provided a preview of the matching corresponding segment that has been revised earlier. This enables the revisor to effectively revise the differences between the segment under revision and the best matching corresponding segment that has been revised earlier.

In embodiments of the revision system according to the present invention, defined by claim 3, the segment marking submodule is further configured to mark the segment in said translated text uniformly if the segment is identical to the corresponding segment in the revised translated text.

Indeed, if there is a 100 % match between a segment in the translated text under revision and a corresponding segment in a previously revised translation, that segment can be coloured green, or any other type of uniform marking may be applied to indicate that no further revision of that segment is required. If the corresponding segment in the previously revised translation was found to be error-free, no further action is required. However, also in case the previously revised segment contains translation errors, there may be a 100 % match with another translator's translation of the corresponding segment of the source text. Also in such case, the segment may be marked uniformly green in the translated text under revision, whilst the revision system shall automatically apply the penalties, thus saving time and energy for the revisor and guaranteeing consistent scoring across the entire set of translated texts.

In embodiments of the revision system defined by claim 4, the segment marking submodule is further configured to mark in the segment of the translated text a translation error identical to a translation error in the corresponding segment of the revised translated text, the marking of the translation error being different from the marking of portions of the segment of the translated text that are error free.

Indeed, embodiments of the revision system according to the invention may mark translation errors and error-free portions in a segment for which a corresponding, matching segment was found in a previously revised translation differently. Hence, portions of a segment that are identical to portions of the matching, previously revised segment that were found to be error-free during the previous revision, may be coloured green for instance. Similarly, portions of a segment that are identical to portions of the matching, previously revised segment that were found to contain one or several translation errors, may be coloured yellow. The revision system shall automatically apply the penalties, thus saving time and energy for the revisor and guaranteeing consistent scoring across the entire set of translated texts, and the revisor is given the impression that the automated revision through matching of segments with previously revised translations works properly as he gets an overall impression of the detected translation errors in the text under revision through the different colouring or marking.

In embodiments of the revision system defined by claim 5, the segment marking submodule is further configured to mark in the segment of the translated text a portion differing from a corresponding portion in the corresponding segment of the revised translated text, the marking of the portion being different from the marking of portions of the segment of the translated text that are identical and error free.

Thus, if there is no 100 % match between a segment in the translated text under revision and a corresponding segment in a previously revised translation, the revision system may use different colouring or marking for portions of the segment that are identical to portions of the matching segment and portions of the segment that differ. This way, the revision system indicates visibly the differences between a segment and the best matching segment in previously revised translations enabling the revisor to focus only on these differences while revising. Again, this will help the revisor substantially in saving time and energy when revising a set of translated texts.

In embodiments of the revision system according to the present invention, defined by claim 6, the segment matching module is configured to determine a match level as the percentage of identical words in the segment and the corresponding segment.

Thus, in order to determine the best matching segment across previously revised translations, the revision system may determine the number of identical words in two corresponding translated segments, and divide this by the total number of words in the corresponding segment in the translation under revision to obtain a percentage of exact matching words. The corresponding, previously revised translated segment with highest percentage of exact matching words will be selected as the matching segment. The calculated percentage further will be considered to represent the match level between the segment under revision and the corresponding previously revised segment.

In alternate embodiments of the revision system according to the present invention, defined by claim 7, the segment matching module is configured to determine a match level as the highest amount of identical subsequent words in the segment and the corresponding segment.

Thus, as an alternative to identical word counting, embodiments of the revision system may apply longest prefix matching as criterion to select the best matching corresponding segment. In the corresponding previously revised segments, the revision system then looks for the highest number of words that are translated correctly and appear in the same order, i.e. the longest identical word sequence, whether it is error-free or not. The corresponding revised segment that contains this longest identical word sequence is elected as matching corresponding segment and the length of the sequence can be considered as match level.

The skilled person will appreciate that the present invention is not restricted to any particular criterion used to determine the matching corresponding segment in previously revised translations. The above two criteria, i.e. identical word percentage match and longest prefix match can for instance be combined through weighted averaging, resulting in yet another criterion to determine the matching corresponding segment.

In embodiments of the revision system according to the present invention, defined by claim 8, the segmentation submodule is configured to automatically identify segments in the translated text.

Indeed, based on character or text interpretation, the revision system itself may autonomously recognize segments in a translated text. Paragraph numbers or punctuation marks may for instance assist in the automatic recognition of paragraphs, sentences, or other text portions that may constitute segments corresponding to segments identified in the source text.

In embodiments of the revision system according to the present invention, defined by claim 9, the segments correspond to sentences.

In alternative embodiments of the revision system according to the invention, defined by claim 10, the segments correspond to paragraphs.

In embodiments of the revision system according to the invention, defined by claim 11, the segmentation submodule is configured to receive input from a revisor to identify segments in the translated text.

Indeed, instead of autonomously detecting the segments in a translated text, the revision system may be assisted by the revisor to identify the segments in the translated text under revision corresponding to predefined segments in the source text. The revisor may for instance use the computer mouse to select or snap a portion in the text under revision, and confirm through mouse clicks or keystrokes that the selected portion represents a segment.

In addition to a revision system as defined by claim 1, the present invention also concerns a corresponding computer-implemented method for revising translated texts as defined by claim 12, the method comprising:
- receiving a set of translated texts, the translated texts representing respective translations of a same source text by different translators;
- storing translation errors associated with the translated texts in a translation error memory;
- searching for the translation errors in a translated text out of the set and identifying the translation errors in the translated text to thereby generate a revised translated text;
- storing revised translated texts in a revised texts memory;
- dividing the translated text in segments;
- determining for a segment in the translated text a corresponding segment in a revised translated text stored in the revised texts memory best matching with the segment; and
- marking the segment in the translated text in view of the match.

### Brief Description of the Drawings

Fig. 1 illustrates an embodiment of the revision system 100 according to the present invention;
Fig. 2A and Fig. 2B illustrate operation of an embodiment of the revision system according to the present invention with match level determination;
Fig. 3A and Fig. 3B illustrate operation of an embodiment of the revision system according to the present invention with different marking of segment portions;
Fig. 4A and Fig. 4B illustrate operation of an embodiment of the revision system according to the present invention with correction suggestions; and
Fig. 5 illustrates a suitable computing system 500 for realizing methods and devices according to embodiments of the invention.

### Detailed Description of Embodiment(s)

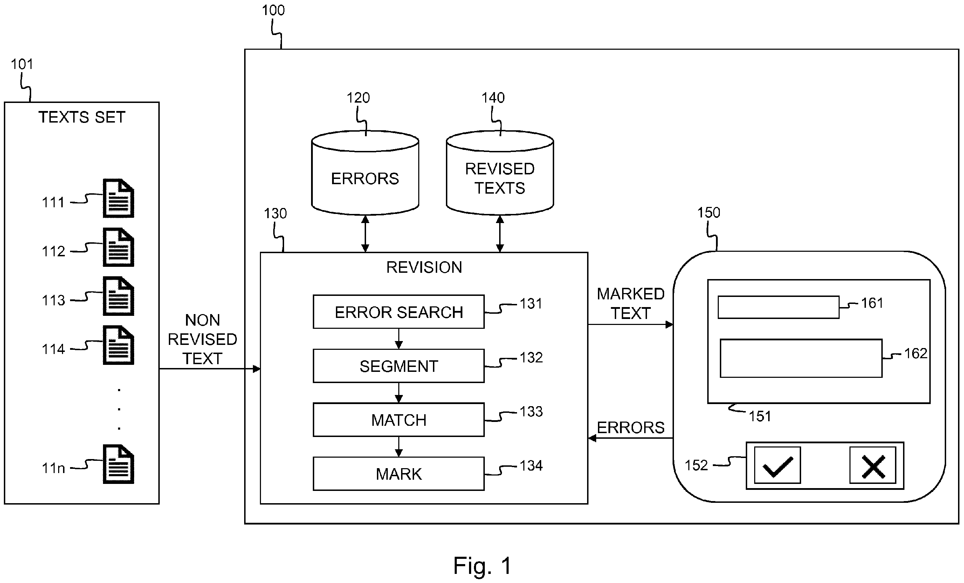

The revision system 100 drawn in Fig. 1 is a productivity tool that enables a revisor to efficiently and objectively revise a set 101 of translated texts 111, 112, 113, 114, ..., 11 n that represent translations of the same source text. The translations 111-11 n may for instance be produced by student translators in the course of a test or exam. The revision system 100 relies on an error memory 120 instead of a traditional translation memory that would contain correct translations for certain phrases or sentences in the source text. The error memory 120 memorizes translation errors or wrong translations of words, phrases, sentences, expressions, etc. for the source text. The error memory 120 may contain translation errors that are predefined, i.e. errors that the revisor or editor of the source text expects to be made and that are entered in the error memory 120 upfront, before any revision has taken place. The error memory 120 further memorizes translation errors that are identified by the revisor while revising the translated texts 111-11n. In relation to each translation error, the error memory 120 may also memorize corrections, i.e. substitute words, phrases, sentences, expressions, etc. that could be used to correct the respective translation errors. In relation to each translation error, the error memory 120 may also memorize a penalty, or a negative score or a penalty category to be applied when the error appears in translations. The error database 120 will enable the revision system 100 to suggest errors in non-revised translations 111-11n to the revisor, but also to check if newly identified errors also appear in already revised translations. These revised translated texts are stored in a revised texts memory 140. Thanks to the error memory 120, the productivity and efficiency of the revisor is improved, and revising a set of translated texts 111-11n is objectivised as identical errors will be detected and penalized similarly across all translated texts 111-11n. The revision system 100 thereto comprises a revision module 130 that imports a non-revised text 111-11n, for instance the non-revised text that the revisor selects for revision or the next non-revised text in line for revision. An error search sub-module 131 of the revision module 130 scans the imported non-revised text for the translation errors contained in the error database 120 and marks the detected translation errors in a marked version of the translated text that is outputted to display 150 for being displayed to the revisor. The revisor can then either accept or reject the errors suggested by the revision module 130 by selecting the suggested error in the displayed marked-up text 151 and using the acceptance/rejection buttons 152. In addition to the suggested errors, the translator may identify new errors while revising the displayed translated text 151. When such new error is identified by the revisor, the error is reported back to the revision module 130 that stores the error in error database 120 and automatically checks if the new identified error also appears in already revised texts stored in the revised texts memory 140.

In addition to suggesting errors, it is however possible that a translator translated a segment of the source text in the exact same way or nearly exact to the translation of that same segment by another translator. In case the translation of a segment is identical to an already revised translation of that segment by another translator, the revisor preferably should not have to accept or reject the errors in the translated segment anymore. In such case, the revision module 130 could apply the penalties for identical translation errors in identical translated segments automatically. In case the translated segment was found to be identical to the previously revised translation, the revisor should not have to revise the identical segment in the translation under revision at all. Since there is a 100 % match with an earlier revised translation, the revision system can simply apply the penalties applied to the earlier revised translation. This saves the revisor of a set of translations 111-11n of the same source text a significant amount of time and effort, and is achieved in the revision system 100 by the segmentation submodule 132, segment matching submodule 133 and segment marking submodule 134. The segmentation submodule 132 identifies segments in the translated text under revision. These segments correspond to segments predefined or identified in the source text by the revisor, or automatically by the system, or semi-automatically by the system with manual assistance of the revisor. The source text to be translated in other words is a segmented source text. As a consequence, also the translated textx 111-11n are segmented and corresponding segments identified by the segmentation submodule 132 in plural translated texts 111-11n represent respective translations of the same segment in the source text by different translators. The so called "corresponding segments" in different translated texts 111-11n consequently can be compared with each other. The segmentation submodule 132 may for instance identify sentences in the translated text under revision if the segments in the source text represent sentences. Alternatively, the segmentation submodule 132 may for instance identify paragraphs in the translated text under revision if the segments in the source text represent paragraphs. Obviously, the skilled person will appreciate that segments may also represent other portions of the source text. The corresponding portions then have to be identified by the segmentation submodule 132 in the translated text under revision. In certain embodiments of the invention, this may be automated or may require input from the revisor who may help in segmenting the translated text under revision by identifying the segments in the displayed version 151 of the translated text under revision. Once the segments are identified in the translated text under revision, the segment matching submodule 132 compares each segment with the corresponding segment(s) in the previously revised translated texts that are stored in the revised texts memory 140. For segments that match 100 percent with a corresponding segment in a previously translated text, the translated segment is marked by the segment marking submodule 134. The marked text under revision is outputted by the revision module 130 to be displayed by display 150. Marked segments like for instance segments 161 and 162 in the translated text under revision 151 are displayed differently from non-marked segments. They may for instance be background shaded with a green color, underlined, text coloured, or visibly marked in any other way indicating to the revisor that no further revision of these segments 161 and 162 is required. The marked segments 161 and 162 may be error-free, but the marked segments 161 and 162 may also contain translation errors while there is a 100 percent match with the corresponding segment in another translator's translation. In the latter case, the penalties for the translation errors can be applied automatically and consistently with the penalties applied when revising the other translator's translation, without requiring any further revision, confirmation or interaction from the revisor.

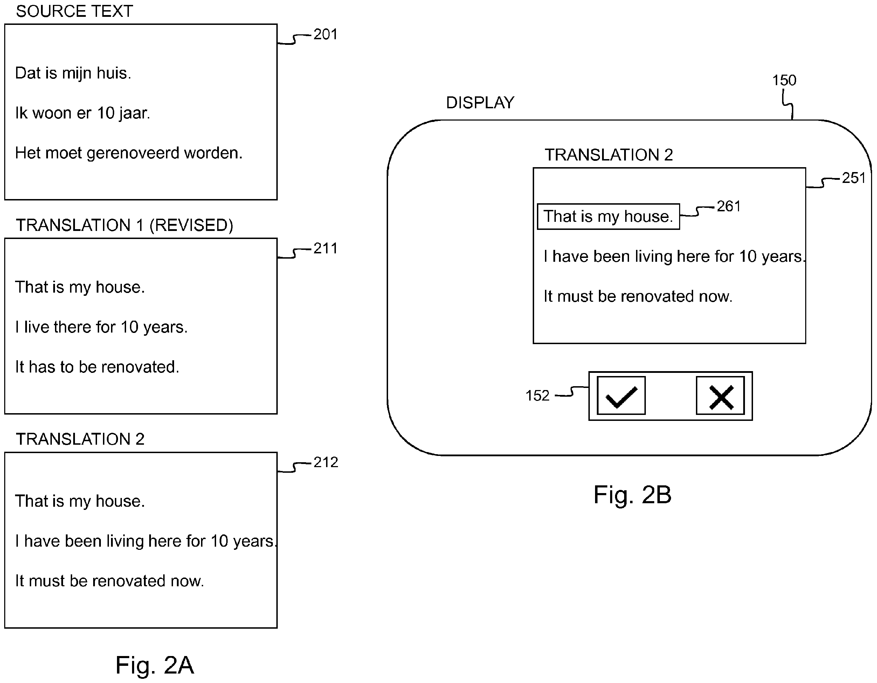

The result of the operation of the segmentation submodule 131, the segment matching submodule 133 and the segment marking submodule 134 as described above is illustrated by Fig. 2A and Fig. 2B. Fig. 2A shows a source text 201 comprising three sentences in the Dutch language. The first sentence reads "Dat is mijn huis.", the second sentence reads "lk woon er 10 jaar.", and the third sentence reads "Het moet gerenoveerd worden.". It is assumed that the three sentences in source text 201 represent three segments. Fig. 2A further shows a first translated text 211 of a first translator. Therein, the translation of the first sentence reads "That is my house.", the translation of the second sentence reads "I live there for 10 years.", and the translation of the third sentence reads "It has to be renovated.". It is assumed in Fig. 2A that the first translation 211 has been revised already and was found to be error-free. The first translation 211 consequently has been stored unaltered, i.e. without revisor comments or corrections and without negative penalties, in the revised texts memory 140. Fig. 2A further shows a second translated text 212 of a second translator. Therein, the translation of the first sentence reads "That is my house.", the translation of the second sentence reads "I have been living here for 10 years." and the translation of the third sentence reads "It must be renovated now.". It is assumed in Fig. 2A that the second translation 212 is currently under revision by the revisor as a consequence of which Fig. 2B depicts what is displayed in display 150 of revision system 100. Segmentation submodule 131 identifies three segments in the second translation 212, respectively corresponding to the three sentences. Segment matching submodule 133 compares the first segment in the translation under revision 212 with the first segment of already revised translations. As it is assumed that only the first translation 211 has been revised so far, the segment matching submodule only compares the first segment of translation 212 with the first segment of revised translation 211 and concludes that there is a 100 percent match between these corresponding segments. As a consequence, the first segment 261 will be marked visibly in the displayed version 251 of the translation 212 under revision. The marking is done under control or instruction of the segment marking submodule 134. In a similar way, segment matching submodule 133 compares the second segment in the translation under revision 212 with the second segment of already revised translations, i.e. only with the second segment of revised translation 211 in the example given. As there is no 100 percent match between the segments, the second segment shall not be marked in the displayed version 251 of the translated text under revision 212. Further similarly, segment matching submodule 133 compares the third segment in the translation under revision 212 with the third segment of already revised translations, i.e. only with the third segment of revised translation 211 in the example given. As there is also here no 100 percent match between the segments, the third segment shall also remain unmarked in the displayed version 251 of the translated text under revision 212. When revising the second translation 212, the revisor thus is made aware of the fact that the first segment 261 thereof needs no revision. The revisor only has to revise the second and third segments. In these second and third segments translation errors that are stored in the error database 120 may be marked such that the revisor can accept or reject these known translation errors via acceptance/rejection buttons 152. In addition, the revisor may identify new errors, and suggest corrections and penalties for such new errors. Upon confirmation, such new errors and possibly any corrections or penalties suggested by the revisor, will be fed back to the revision module 130 for storage in error database 120. When the revision of translated text 212 is completed, the revised translated text shall be stored in revised texts memory 140 and shall serve as an additional revised text whose revised text segments can be compared with corresponding segments in further translations under revision. The revisor benefits from earlier revisions in order to reduce the effort and time for new revisions. The efficiency gain in terms of time and effort savings for the revisor will increase with the amount of translated texts revised and stored in the revised texts memory 140 because each segment in a translation under revision can be matched with a growing number of corresponding segments already revised hence increasing the chances for a 100 percent match with an earlier revised corresponding segment. In addition, consistency in the applied penalties for the same translation error across multiple translations is guaranteed.

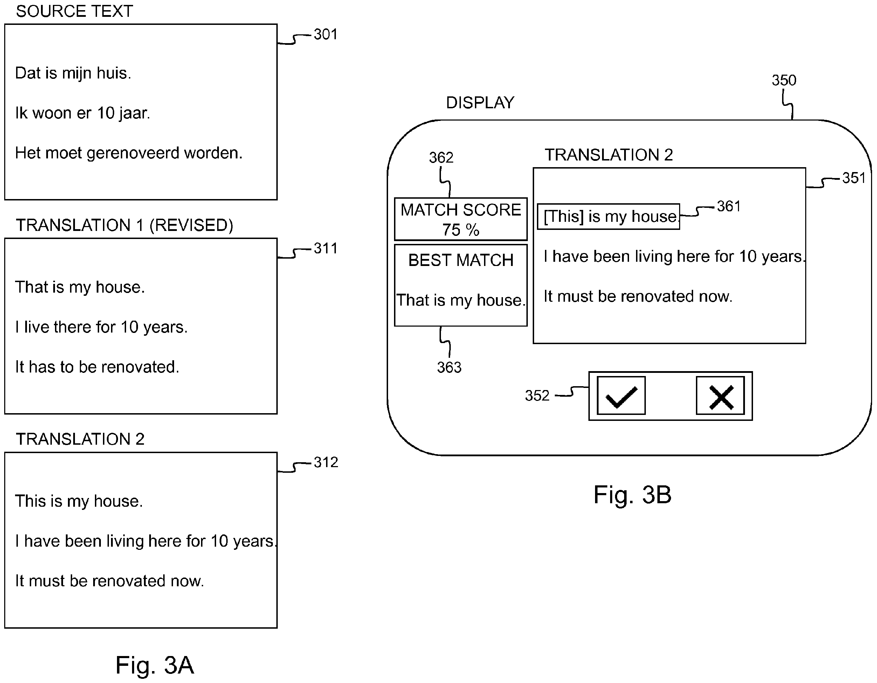

Advanced embodiments of the revision system according to the invention do not only mark segments that match 100 percent with a previously revised corresponding segment, but indicate in case there is no 100 percent match which revised corresponding segment matches best with the text segment under revision. Preferably, such embodiments of the invention display the best matching revised segment and visibly indicate the differences between the segment under revision and the best matching revised corresponding segment, allowing the revisor to focus only on these differences while revising the segment. Such embodiment is illustrated by Fig. 3A and Fig. 3B. Fig. 3A shows a source text 301 comprising three sentences in the Dutch language. The first sentence reads "Dat is mijn huis.", the second sentence reads "lk woon er 10 jaar.", and the third sentence reads "Het moet gerenoveerd worden.". It is assumed that the three sentences in source text 301 represent three segments. Fig. 3A further shows a first translated text 311 of a first translator. Therein, the translation of the first sentence reads "That is my house.", the translation of the second sentence reads "I live there for 10 years.", and the translation of the third sentence reads "It has to be renovated.". It is assumed in Fig. 3A that the first translation 311 has been revised already and was found to be error-free. The first translation 311 consequently has been stored unaltered, i.e. without revisor comments or corrections and without negative penalties, in the revised texts memory of an advanced embodiment of revision system 100. Fig. 3A further shows a second translated text 312 of a second translator. Therein, the translation of the first sentence reads "This is my house.", the translation of the second sentence reads "I have been living here for 10 years." and the translation of the third sentence reads "It must be renovated now.". It is assumed in Fig. 3A that the second translation 312 is currently under revision by the revisor as a consequence of which Fig. 3B depicts what is displayed in display 350 of the advanced embodiment of revision system 100. Segmentation submodule of the advanced embodiment of revision system 100 identifies three segments in the second translation 312, respectively corresponding to the three sentences. Segment matching submodule of the advanced embodiment of revision system 100 compares the first segment in the translation under revision 312 with the first segment of already revised translations. As it is assumed that only the first translation 311 has been revised so far, the segment matching submodule only compares the first segment of translation 312 with the first segment of revised translation 311 and concludes that there is a 75 percent match between these corresponding segments. The match level is determined by counting the number of identical words in the compared segments, but the skilled person will appreciate that other criteria or algorithms may be applied to determine a match level between two corresponding text segments. The best matching revised segment for the first segment "This is my house." in the second translation 312 thus is the first segment "That is my house." in the revised first translation 311. As a consequence, as long as this first segment 361 is under revision, this segment will be marked visibly in the displayed version 351 of the translation 312 under revision, the match level or match score 362 of 75 percent will be displayed and the best matching revised corresponding segment 363 will be displayed. Preferably, also the differences between the segment under revision 361 and the best matching revised corresponding segment 363 are visibly marked, as is for instance shown in Fig. 3B where the word "This" is put between square brackets to indicate the difference from the word "That" that is used in the best matching revised corresponding segment 363. The marking is done under control or instruction of the segment marking submodule in the advanced embodiment of revision system 100. The revisor can use the acceptance/rejection buttons 352 to accept or reject the marked differences as errors. Displaying the best matching revised corresponding segment, the match score and remaining differences as illustrated by Fig. 3A-3B will further increase the efficiency in revising a set of translations of a same source text in terms of time and effort spent by the revisor because also in case of a partial match, the revisor will be able to concentrate on the parts of the segment that differ from an earlier revision and spent no further time on parts of the segment that are identical to corresponding parts of the best matching revised corresponding segment.

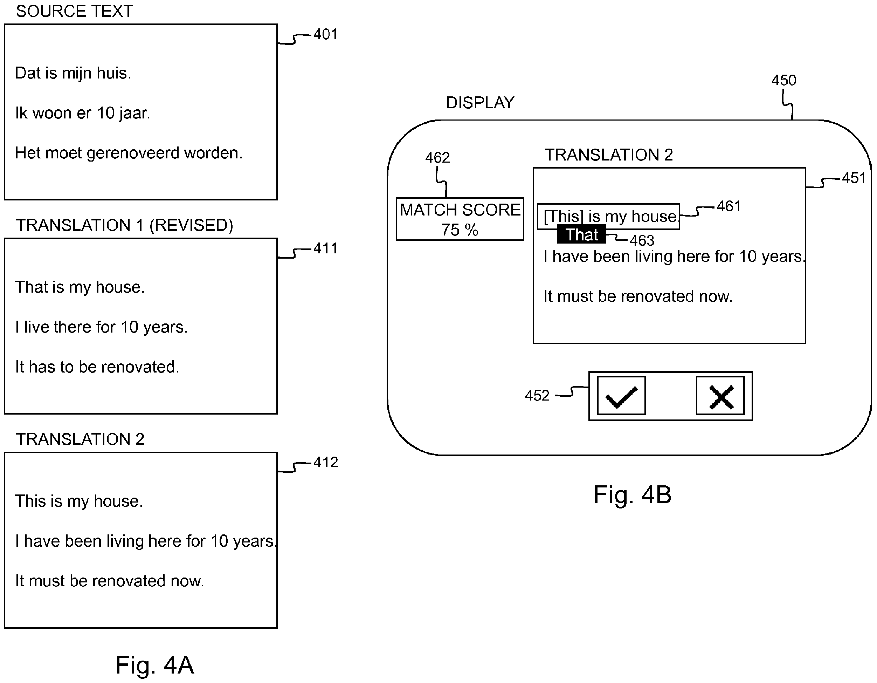

In a further advanced embodiment of the revision system according to the invention, possible corrections of a translation error are displayed. These possible corrections are extracted from matching corresponding segments that have been revised already. Such embodiment is illustrated by Fig. 4A and Fig. 4B. Fig. 4A shows a source text 401 comprising three sentences in the Dutch language. The first sentence reads "Dat is mijn huis.", the second sentence reads "lk woon er 10 jaar.", and the third sentence reads "Het moet gerenoveerd worden.". It is assumed that the three sentences in source text 401 represent three segments. Fig. 4A further shows a first translated text 411 of a first translator. Therein, the translation of the first sentence reads "That is my house.", the translation of the second sentence reads "I live there for 10 years.", and the translation of the third sentence reads "It has to be renovated.". It is assumed in Fig. 4A that the first translation 411 has been revised already and was found to be error-free. The first translation 411 consequently has been stored unaltered, i.e. without revisor comments or corrections and without negative penalties, in the revised texts memory of an advanced embodiment of revision system 100. Fig. 4A further shows a second translated text 412 of a second translator. Therein, the translation of the first sentence reads "This is my house.", the translation of the second sentence reads "I have been living here for 10 years." and the translation of the third sentence reads "It must be renovated now.". It is assumed in Fig. 4A that the second translation 412 is currently under revision by the revisor as a consequence of which Fig. 4B depicts what is displayed in display 450 of the advanced embodiment of revision system 100. Segmentation submodule of the advanced embodiment of revision system 100 identifies three segments in the second translation 412, respectively corresponding to the three sentences. Segment matching submodule of the advanced embodiment of revision system 100 compares the first segment in the translation under revision 412 with the first segment of already revised translations. As it is assumed that only the first translation 411 has been revised so far, the segment matching submodule only compares the first segment of translation 412 with the first segment of revised translation 411 and concludes that there is a 75 percent match between these corresponding segments. The match level is determined by counting the number of identical words in the compared segments, but the skilled person will appreciate that other criteria or algorithms may be applied to determine a match level between two corresponding text segments. The best matching revised segment for the first segment "This is my house." in the second translation 412 thus is the first segment "That is my house." in the revised first translation 411. As a consequence, as long as this first segment 461 is under revision, this segment will be marked visibly in the displayed version 451 of the translation under revision 412, and the match level or match score 462 of 75 percent will be displayed. Although not shown in Fig. 4B, it is possible that also the best matching revised corresponding segment is displayed. Further, the differences between the segment under revision 461 and the best matching revised corresponding segment are visibly marked. As a result, in Fig. 4B, the word "This" is put between square brackets to indicate the difference from the word "That" that is used in the best matching revised corresponding segment. The marking is done under control or instruction of the segment marking submodule in the advanced embodiment of revision system 100. At last, since the best matching corresponding segment was found to be error free, the advanced embodiment illustrated by Fig. 4A-4B can suggest a possible correction 463 for the possible error resulting from the word "This". The revisor can use the acceptance/rejection buttons 452 to accept or reject the marked difference "This" as an error, and to accept or reject the suggested correction "That" as a valid correction of the error. Displaying possible corrections for translation errors, extracted from previous revisons, will further increase the efficiency in revising a set of translations of a same source text in terms of time and effort spent by the revisor because the revisor no longer has to enter possible corrections manually. Moreover, it will improve consistency as the same correction or corrections will be suggested for the same translation error across all translated texts.

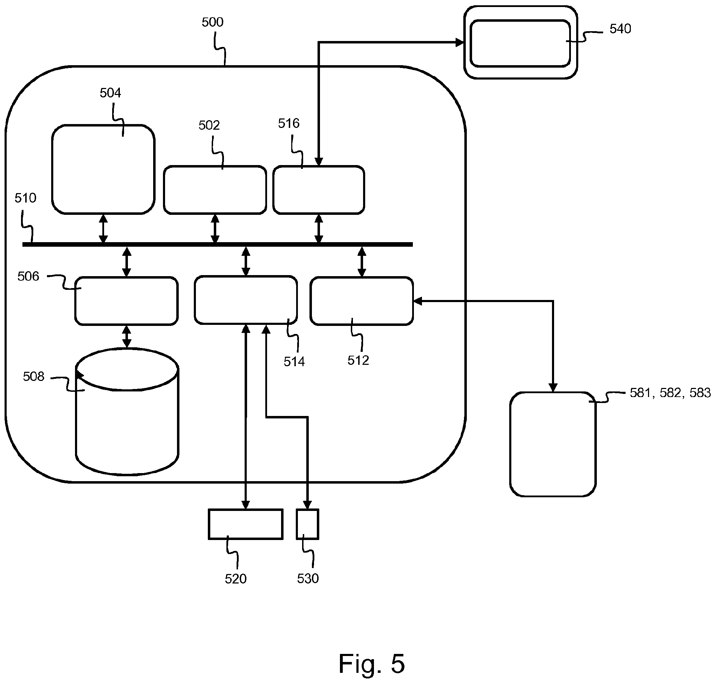

Fig. 5 shows a suitable computing system 500 enabling to implement embodiments of the method for revising translated texts according to the invention. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems, for example with other computing devices 581, 582, 583. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, -ROM disk, solid state drives, flash memory cards, ... could be used. It is noticed that the entire method according to the present invention can be executed centralized, e.g. on a server in a management centre or in a cloud system, or it can be partially executed on a remote electronic device, e.g. worn by the user, and partially on a central server. Computing system 500 could thus correspond to the processing system available centrally or the processing system available in the electronic device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A revision system (100) for revising translated texts (111-11n), said revision system (100) being configured to receive:
- a set (101) of translated texts (111-11n), said translated texts (111-11n) comprising respective translations of a same source text by different translators,
said revision system (100) comprising:
- a translation error memory (120) configured to store translation errors associated with said translated texts (111-11n);
- a revision module (130) comprising a search submodule (131) configured to search for said translation errors in a translated text out of said set (101) and to identify said translation errors in said translated text for acceptance or rejection by a revisor, to thereby generate a revised translated text; and
- a revised texts memory (140) configured to store revised translated texts,
**CHARACTERISED IN THAT** said revision module (130) further comprises:
- a segmentation submodule (132) configured to identify segments in said translated text;
- a segment matching submodule (133) configured to determine for a segment in said translated text a corresponding segment in a revised translated text stored in said revised texts memory (140) best matching with said segment; and
- a segment marking submodule (134) configured to mark said segment (161, 162) in said translated text in view of said match.

2. A revision system (100) according to claim 1, further comprising:
- a display (350) configured to display said translated text (351) or a portion of said translated text comprising said segment (361) marked, and configured to display said corresponding segment (363) best matching with said segment (361) marked.

3. A revision system (100) according to claim 1, wherein:
- said segment marking submodule (134) is further configured to mark said segment (161, 162; 261) in said translated text uniformly if said segment is identical to said corresponding segment in said revised translated text.

4. A revision system (100) according to claim 1 or 2, wherein:
- said segment marking submodule (134) is further configured to mark in said segment of said translated text a translation error identical to a translation error in said corresponding segment of said revised translated text, the marking of said translation error being different from the marking of portions of said segment of said translated text that are error free.

5. A revision system (100) according to one of the preceding claims, wherein:
- said segment marking submodule (134) is further configured to mark in said segment (361) of said translated text (351) a portion differing from a corresponding portion in said corresponding segment of said revised translated text (311), the marking of said portion being different from the marking of portions of said segment of said translated text (361) that are identical and error free.

6. A revision system (100) according to one of the preceding claims, wherein:
- said segment matching module (133) is configured to determine a match level as the percentage of identical words in said segment and said corresponding segment.

7. A revision system (100) according to one of the preceding claims, wherein:
- said segment matching module (133) is configured to determine a match level as the highest amount of identical subsequent words in said segment and said corresponding segment.

8. A revision system (100) according to one of the preceding claims, wherein:
- said segmentation submodule (132) is configured to automatically identify segments in said translated text.

9. A revision system (100) according to claim 8, wherein said segments correspond to sentences.

10. A revision system (100) according to claim 8, wherein said segments correspond to paragraphs.

11. A revision system (100) according to one of claims 1-7, wherein:
- said segmentation submodule (132) is configured to receive input from a revisor to identify segments in said translated text.

12. A computer-implemented method for revising translated texts, said method comprising:
- receiving a set (101) of translated texts (111-11n), said translated texts (111-11 n) representing respective translations of a same source text by different translators;
- storing translation errors associated with said translated texts (111-11n) in a translation error memory (120);
- searching for said translation errors in a translated text out of said set (101) and identifying said translation errors in said translated text to thereby generate a revised translated text; and
- storing revised translated texts in a revised texts memory (140),
**CHARACTERISED IN THAT** said method further comprises:
- dividing said translated text (151) in segments;
- determining for a segment in said translated text (151) a corresponding segment in a revised translated text stored in said revised texts memory (140) best matching with said segment; and
- marking said segment (161; 162) in said translated text (151) in view of said match.
